# FASCICULE DE BREVET EUROPEEN

(11) **EP 1 036 297 B1**
(45) Date de publication et mention de la délivrance du brevet: **06.11.2002**
(21) Numéro de dépôt: 98955738.4
(22) Date de dépôt: 25.11.1998
(51) Int. Cl.: F28F 27/02, F02M 31/20

(54) **ECHANGEUR DE CHALEUR AIR-LIQUIDE POUR CIRCUIT HYDRAULIQUE DE VEHICULE**
LUFT-FLÜSSIGKEITSWÄRMETAUSCHER FÜR HYDRAULIKKREISLAUF EINES FAHRZEUGS
AIR-LIQUID HEAT EXCHANGER FOR MOTOR VEHICLE HYDRAULIC CIRCUIT

(30) Priorité: 03.12.1997 FR 9715212
(43) Date de publication de la demande: 20.09.2000
(73) Titulaire: NOBEL PLASTIQUES, 92000 Nanterre (FR)
(72) Inventeur: LE GUEN, Loic, F-51300 Vitry-le-François (FR); MILHAS, Pierre, F-51300 Vitry-le-François (FR)
(74) Mandataire: Robert, Jean-Pierre
(86) Numéro de dépôt international: FR9802524
(87) Numéro de publication internationale: WO99028694

(56) Documents cités:
- WO-A-94/23257
- FR-A- 2 629 577
- US-A- 5 205 354
- PATENT ABSTRACTS OF JAPAN vol. 097, no. 011, 28 novembre 1997 & JP 09 189463 A (MITSUBISHI ELECTRIC CORP), 22 juillet 1997

## Description

L'invention concerne un échangeur de chaleur air-liquide pour circuit hydraulique de véhicule automobile. Un tel échangeur est connu par le JP-A-09 189 463.

Dans les véhicules à moteur diesel récents, on utilise de plus en plus souvent des systèmes d'injection à très haute pression. Dans ces systèmes, la pression élevée générée par la pompe provoque une élévation importante de la température du gazole. Or, on sait que le surplus de gazole qui n'est pas consommé par le moteur est renvoyé au réservoir par l'intermédiaire d'un circuit de retour. Il en résulte une élévation de la température à l'intérieur du réservoir qui peut être préjudiciable non seulement pour le réservoir lui-même et les canalisations de retour, mais aussi pour le fonctionnement général du système d'injection et de son circuit d'alimentation.

Il est donc apparu nécessaire, dans le cadre de ces systèmes d'injection à haute pression, de refroidir le gazole à un endroit quelconque de sa circulation entre le réservoir et le dispositif d'injection. Pour des raisons de commodité et d'encombrement, la solution la plus généralement retenue consiste à placer sur le circuit retour, sous le châssis du véhicule entre le dispositif d'injection (généralement situé à l'avant du véhicule) et le réservoir (généralement situé à l'arrière du véhicule), un refroidisseur à air.

Les refroidisseurs actuels utilisés pour cette application particulière sont généralement constitués d'un tube conformé en serpentin. Ces serpentins, qui sont généralement réalisés en matière plastique pour éviter les problèmes de corrosion, présentent plusieurs inconvénients dont le principal réside dans leur manque de rigidité qui les rend flexibles et, partant, malcommodes à fixer sur le châssis du véhicule. En outre, pour la même raison de flexibilité, leur fixation nécessite un grand nombre de points d'attache, ce qui augmente le coût et le temps de pause. D'autre part, la nécessaire limitation du rayon de courbure du tube formant le serpentin impose un encombrement relativement important si l'on souhaite disposer d'une longueur de tube suffisante pour assurer un refroidissement efficace.

On connaît par ailleurs (voir US-A-5 205 354 et JP-A-09 189 463) des échangeurs air-liquide pour circuit hydraulique de véhicule automobile, comportant une pluralité de tubes s'étendant entre deux blocs de distribution et de fixation auxquels leurs extrémités sont raccordées, chacun de ces deux blocs comportant :
- une face qui est en regard de l'autre bloc et qui porte des organes internes de raccordement de l'extrémité correspondante des tubes au bloc concerné,
- un canal de distribution interne reliant les organes internes de raccordement entre eux,
- un organe de raccordement externe du bloc concerné et de son canal de distribution interne au circuit hydraulique du véhicule.

On obtient ainsi un refroidisseur compact et relativement rigide qui peut être manipulé et monté aisément. La fabrication est simple et surtout flexible. En effet, il suffit, à partir de blocs de distribution et de fixation standards, d'adapter des tubes de différentes longueurs en fonction des dimensions souhaitées. En outre, les blocs assurent une protection des tubes contre d'éventuelles projections, notamment lorsque l'échangeur est placé à l'horizontal sous le châssis du véhicule.

Toutefois, l'efficacité du refroidissement ainsi obtenu n'est pas toujours suffisante. C'est pourquoi il est apparu utile d'améliorer ce type d'échangeur afin d'en conserver les avantages tout en augmentant ses capacités d'échanges thermiques.

Selon l'invention, au moins l'un des deux blocs est traversé, entre sa face portant les organes internes de raccordement des tubes audit bloc et sa face opposée, par au moins une tuyère de ventilation.

Cette tuyère de ventilation participe à double titre à l'efficacité de l'échange thermique réalisé par l'échangeur. D'une part, elle améliore le refroidissement du bloc lui-même en permettant une circulation d'air à l'intérieur de ce bloc. D'autre part, elle canalise le flux d'air incident vers les tubes pour optimiser la dissipation thermique réalisée par ces derniers.

Avantageusement alors, la tuyère de ventilation est évasée depuis la face du bloc portant les organes internes de raccordement des tubes audit bloc vers la face opposée dudit bloc.

Selon une autre caractéristique avantageuse de l'invention, au moins l'un des deux blocs est pourvu, sur une face opposée à celle portant des organes internes de raccordement des tubes audit bloc, d'ailettes de refroidissement. Ces ailettes améliorent encore la dissipation thermique du bloc. Elles peuvent également exercer la fonction de déflecteurs pour orienter de façon favorable le flux d'air incident.

Selon une autre caractéristique avantageuse de l'invention, l'organe externe de raccordement de chaque bloc est disposé sur une face dudit bloc opposée à celle portant les organes internes de raccordement des tubes audit bloc.

Selon une autre caractéristique avantageuse de l'invention, chacun des deux blocs est pourvu, sur une face sensiblement perpendiculaire à celle portant les organes internes de raccordement des tubes audit bloc, de moyens pour sa fixation sur un élément de structure du véhicule. Les blocs assurent ainsi une triple fonction : non seulement ils assurent une liaison à la fois mécanique et hydraulique des tubes entre eux, mais ils permettent encore de réaliser une fixation rapide, commode et standardisée de l'échangeur sur l'élément de structure du véhicule.

Avantageusement alors, les moyens de fixation sont des organes d'encliquetage.

D'autres avantages de l'invention apparaîtront à la lecture de la description qui suit d'un mode de réalisation particulier donné à titre d'exemple non limitatif.

Il sera fait référence aux dessins annexés, parmi lesquels :
- la figure 1 est une vue en perspective d'un échangeur conforme à l'invention ;
- la figure 2 est une vue en coupe selon le plan II-II des figures 1 et 3 ;
- la figure 3 est une vue en coupe selon le plan III-III de la figure 2.

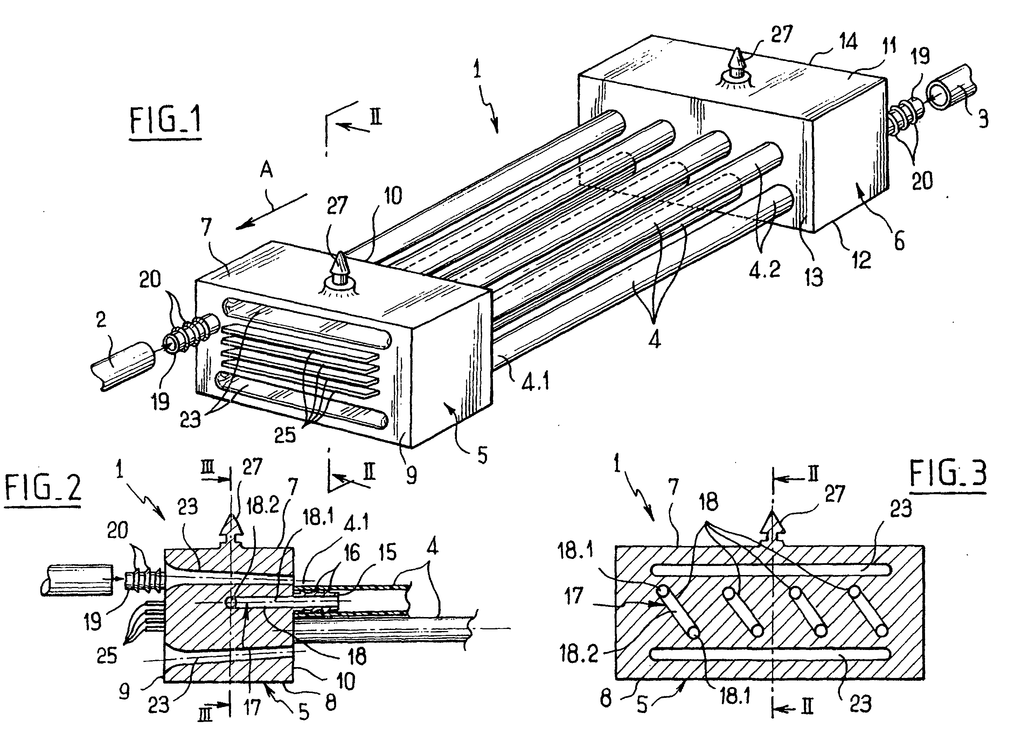

Aux figures 1 à 3, on a représenté un échangeur de chaleur air-liquide, désigné par la référence générale 1, qui est destiné à être monté sur un circuit hydraulique de véhicule automobile tel qu'un circuit retour de gazole. A la figure 1, on distingue seulement les extrémités 2, 3 d'un conduit de ce circuit hydraulique sur lequel l'échangeur est monté. L'échangeur exerce ici une fonction de refroidisseur du gazole circulant dans le circuit.

L'échangeur 1 comporte une pluralité de tubes 4 qui sont ici réalisés en matière plastique rigide, mais qui pourraient aussi bien être réalisés en un matériau métallique quelconque ou en un matériau composite. Ces tubes sont ici au nombre de huit et sont disposés en quinconce parallèlement à une direction commune horizontale qui correspond à la direction d'avancement A du véhicule sur lequel l'échangeur est monté.

Les tubes 4 s'étendent entre deux blocs de distribution et de fixation 5, 6 auxquels leurs extrémités correspondantes 4.1, 4.2 sont raccordées. Les blocs 5, 6 présentent une forme de parallélépipède rectangle. Le bloc 5 présente ainsi, par référence à la direction d'avancement horizontale A du véhicule, une face horizontale supérieure 7, une face horizontale inférieure 8, une face verticale avant 9 et une face verticale arrière 10. De même, le bloc 6, qui est disposé en arrière du bloc 5, présente une face horizontale supérieure 11, une face horizontale inférieure 12, une face verticale avant 13 qui est en regard de la face verticale arrière 10 du bloc 5, et une face verticale arrière 14.

Les faces des blocs 5 et 6 qui sont en regard l'une de l'autre, c'est-à-dire la face arrière 10 du bloc 5 et la face avant 13 du bloc 6, sont équipées d'organes internes de raccordement 15 de l'extrémité 4.1, 4.2 correspondante des tubes 4 à ces blocs. A la figure 2, où seul le bloc 5 est représenté, on distingue, vue en coupe, l'extrémité 4.1 de l'un des tubes 4 qui est raccordée au bloc 5 par l'organe interne de raccordement 15 qui lui est associé. Cet organe de raccordement est ici constitué par un téton tubulaire dont la surface extérieure est pourvue de dents de sapin 16, sur lequel une extrémité 4.1 du tube 4 est emmanchée. Le raccordement des tubes 4 aux blocs 5 et 6 est ainsi rapide et fiable.

Chacun des tétons 15 qui équipe les faces 10 et 13 des blocs 5 et 6 débouche, comme cela est visible à la figure 2, dans un réseau de distribution interne 17 qui relie entre eux les tétons 15 et donc les extrémités correspondantes 4.1, 4.2 des tubes 4.

Les faces opposées des blocs 5 et 6, c'est-à-dire la face avant 9 du bloc 5 et la face arrière 14 du bloc 6, sont équipées chacune d'un organe externe de raccordement 19 qui se présente, comme les organes internes de raccordement 15, sous la forme d'un téton tubulaire dont la surface extérieure est équipée de dents de sapin 20. Ce téton de raccordement communique, à l'intérieur du bloc 5, 6 concerné, avec le réseau de distribution interne 17. Les tétons 19 des deux blocs 5 et 6 sont enfichés dans les extrémités de conduit 2, 3 du circuit hydraulique sur lequel l'échangeur est monté. Ainsi, lorsque le gazole à refroidir circule de l'extrémité de conduit 3 vers l'extrémité de conduit 2, c'est-à-dire de l'arrière vers l'avant, le téton 19 du bloc 6 constitue une borne d'entrée du gazole dans l'échangeur tandis que le téton 19 du bloc 5 en constitue la borne de sortie.

Plus précisément, comme cela est illustré aux figures 2 et 3, le réseau de distribution interne 17 de chacun des blocs 5 et 6 se compose d'une succession de quatre canaux 18 en forme de U reliant les tétons 15 deux à deux. Chaque canal 18 en U comporte deux branches 18.1 débouchant dans les tétons 15 et une base 18.2 reliant les deux branches 18.1. Ainsi, le gazole arrivant par le téton 19 du bloc 6 est acheminé vers l'un des tubes 4, par exemple le tube qui est le plus en avant de la figure 1. Le gazole issu de ce tube pénètre dans le canal 18 correspondant du réseau de distribution interne 17 du bloc 5 et est acheminé par ce canal en U dans le tube 4 adjacent au tube précédemment cité. Le gazole circulant dans ce second tube retourne ainsi dans le canal en U correspondant du réseau de distribution interne du bloc 6 pour être à nouveau acheminé vers le tube 4 suivant. On comprend que, de la sorte, le gazole circule successivement à l'intérieur de chacun des tubes 4 et des blocs 5 et 6 en suivant un circuit en forme de serpentin. Les tubes 4 réalisent ainsi un échange thermique à travers leur paroi entre le gazole circulant dans leur volume intérieur et l'air extérieur.

De manière différente, il serait également possible d'agencer le réseau de distribution interne des blocs 5 et 6 de façon à relier les organes de raccordement interne 15 entre eux, non pas deux à deux pour réaliser une circulation en serpentin du gazole dans les tubes 4, mais tous ensembles de façon à réaliser une circulation en parallèle du gazole simultanément dans tous les tubes 4.

Pour améliorer la circulation d'air et renforcer les échanges thermiques, le bloc avant 5 est traversé, entre sa face avant 9 et sa face arrière 10, par deux tuyères oblongues horizontales 23. Ces tuyères améliorent non seulement le refroidissement du bloc 5 lui-même, mais améliorent également l'efficacité de l'échange thermique réalisé par les tubes 4 en canalisant et accélérant le flux d'air incident et, éventuellement, en créant une turbulence dans l'espace occupé par les tubes 4.

La forme générale des tuyères 23 est convergente, de la face avant 9 vers la face arrière 10. De plus, les tuyères 23 ont une extrémité avant, c'est-à-dire adjacente à la face avant 9 du bloc 5, qui est évasée vers l'avant.

Bien que cela ne soit pas le cas dans l'exemple illustré, il sera bien entendu également possible de ménager dans le bloc arrière 6 des tuyères ou évidements visant à créer une circulation d'air dans ce tube pour améliorer son refroidissement.

De plus, afin d'améliorer encore le refroidissement des blocs 5 et 6, ceux-ci sont équipés, respectivement sur leurs faces avant 9 et arrière 14, d'ailettes de refroidissement 25. Bien que cela ne soit pas le cas dans l'exemple illustré, les ailettes de refroidissement 25 du bloc avant 5 peuvent, au moins pour certaines d'entre elles, exercer une fonction de déflecteur visant à canaliser le flux d'air, éventuellement en coopération avec les tuyères 23. Par exemple, on pourra prévoir de disposer le long du bord inférieur de la tuyère supérieure 23 une ailette légèrement inclinée vers l'avant et vers le bas et, le long du bord supérieur de la tuyère inférieure 23, une ailette légèrement inclinée vers l'avant et vers le haut, de façon à guider le flux d'air en direction des tuyères 23.

Par ailleurs, les blocs 5 et 6 sont pourvus, sur leurs faces supérieures 7 et 11, d'organes d'encliquetage 27 destinés à coopérer avec des organes d'encliquetage homologues associés au châssis du véhicule, de façon à réaliser une fixation rapide et démontable de l'échangeur sur (ou plutôt sous) le châssis du véhicule.

## Revendications

1. Echangeur de chaleur air-liquide pour circuit hydraulique (2, 3) de véhicule automobile, comportant une pluralité de tubes (4) s'étendant entre deux blocs de distribution et de fixation (5, 6) auxquels leurs extrémités sont raccordées, chacun de ces deux blocs comportant :
- une face (10, 13) qui est en regard de l'autre bloc et qui porte des organes internes de raccordement (15) de l'extrémité correspondante des tubes (4) au bloc concerné,
- un canal de distribution interne (17) reliant les organes internes de raccordement (15) entre eux,
- un organe externe de raccordement (19) du bloc concerné et de son canal de distribution interne (17) au circuit hydraulique (2, 3) du véhicule, **caractérisé en ce qu'**au moins l'un (5) des deux blocs est traversé, entre sa face (10) portant les organes internes de raccordement (15) des tubes (4) audit bloc et sa face opposée (9), par au moins une tuyère de ventilation (23).

2. Echangeur selon la revendication 1, **caractérisé en ce que** la tuyère de ventilation (23) est évasée depuis la face (10) du bloc (5) portant les organes internes de raccordement (15) des tubes (4) audit bloc vers la face opposée (9).

3. Echangeur selon l'une des revendications précédentes, **caractérisé en ce qu'**au moins l'un (5) des deux blocs est pourvu, sur une face (9) opposée à celle (10) portant les organes internes de raccordement (15) des tubes (4) audit bloc, d'ailettes de refroidissement (25).

4. Echangeur selon la revendication 3, **caractérisé en ce que** les ailettes de refroidissement (25) sont agencées de façon à former des déflecteurs.

5. Echangeur selon l'une des revendications précédentes, **caractérisé en ce que** l'organe externe de raccordement (19) de chaque bloc (5, 6) est disposé sur une face (9, 14) dudit bloc opposée à celle (10, 13) portant les organes internes de raccordement (15) des tubes (4) audit bloc.

6. Echangeur selon l'une des revendications précédentes, **caractérisé en ce que** chacun des deux blocs (5, 6) est pourvu, sur une face (7, 11) sensiblement perpendiculaire à celle portant les organes internes de raccordement (15) des tubes (4) audit bloc (5), de moyens (27) pour sa fixation sur un élément de structure du véhicule.

7. Echangeur selon la revendication 6, **caractérisé en ce que** les moyens de fixation sont des organes d'encliquetage (27).

## Claims

1. An air-liquid heat exchanger for a motor vehicle fluid flow circuit (2, 3), the heat exchanger comprising a plurality of tubes (4) extending between two fixing and distribution blocks (5, 6) to which the ends of the tubes are coupled, each of said two blocks comprising:
- a face (10, 13) facing the other block and carrying internal coupling members (15) for coupling the corresponding ends of the tubes (4) to the block in question;
- an internal distribution channel (17) interconnecting the internal coupling members (15); and
- an external coupling member (19) for coupling the block in question and its internal distribution channel (17) to the fluid-flow circuit (2, 3) of the vehicle,
the heat exchanger being **characterized in that** at least one (5) of the two blocks has at least one ventilation nozzle (23) passing therethrough between its face (10) carrying the internal coupling members (15) for coupling tubes (5) to said block, and its opposite face (9).

2. A heat exchanger according to claim 1, **characterized in that** the ventilation nozzle (23) flares from the face (10) of the block (5) carrying the internal coupling members (15) for coupling tubes (4) to said block towards the opposite face (9).

3. A heat exchanger according to any preceding claim, **characterized in that** at least one (5) of the two blocks is provided with cooling fins (25) on a face (9) opposite from its face (10) carrying the internal coupling members (15) for coupling tubes (4) to said block.

4. A heat exchanger according to claim 3, **characterized in that** the cooling fins (25) are arranged so as to constituted deflectors.

5. A heat exchanger according to any preceding claim, **characterized in that** the external coupling member (19) of each block (5, 6) is disposed on a face (9, 14) of said block opposite from its face (10, 13) carrying the internal coupling members (15) for coupling tubes (4) to said block.

6. A heat exchanger according to any preceding claim, **characterized in that** each of the two blocks (5, 6) is provided on a face (7, 11) that is substantially perpendicular to the face carrying the internal coupling members (15) for coupling tubes (4) of said block (5) with means (27) for fixing it to a structural element of the vehicle.

7. A heat exchanger according to claim 6, **characterized in that** the fixing means are snap-fastening members (27).

## Patentansprüche

1. Luft-Flüssigkeitswärmetauscher für den Hydraulikkreislauf (2, 3) eines Fahrzeugs, umfassend mehrere Rohre (4), die sich zwischen zwei Verteiler- und Befestigungsblöcken (5, 6) erstrecken, an denen die Rohrenden befestigt sind, wobei jeder der beiden Blöcke umfaßt:
- eine dem anderen Block gegenüberliegende Fläche (10, 13), welche die inneren Elemente (15) zum Verbinden der entsprechenden Enden der Rohre (4) mit dem jeweiligen Block trägt,
- ein innerer Verteilungskanal (17), der die inneren Verbindungselemente (15) miteinander verbindet,
- ein äußeres Element (19) zum Verbinden des jeweiligen Blocks und seines inneren Verteilungskanals (17) mit dem Hydraulikkreislauf (2, 3) des Fahrzeugs, **dadurch gekennzeichnet, daß** durch zumindest einen der Blöcke (5) zwischen seiner Fläche (10), welche die inneren Elemente (15) zum Verbinden der Rohre (4) mit dem Block trägt, und seiner jener abgewandten Fläche (9) mindestens eine Ventilationsdüse (23) verläuft.

2. Tauscher nach Anspruch 1, **dadurch gekennzeichnet, daß** sich die Ventilationsdüse (23) von der Fläche (10) des Blocks (5), welche die inneren Elemente (15) zum Verbinden der Rohre (4) mit dem Block trägt, in Richtung der jener abgewandten Fläche (9) aufweitet.

3. Tauscher nach einem der vorhergehenden Ansprüche, **dadurch gekennzeichnet, daß** zumindest einer der beiden Blöcke (5) auf einer der Fläche (10), welche die inneren Elemente (15) zum Verbinden der Rohre (4) mit dem Block trägt, abgewandten Fläche (9) Kühlrippen (25) hat.

4. Tauscher nach Anspruch 3, **dadurch gekennzeichnet, daß** die Kühlrippen (25) derart angeordnet sind, daß sie Ablenkplatten bilden.

5. Tauscher nach einem der vorhergehenden Ansprüche, **dadurch gekennzeichnet, daß** das äußere Verbindungselement (19) jedes Blocks (5, 6) an einer der Fläche (10, 13), welche die inneren Elemente (15) zum Verbinden der Rohre (4) mit dem Block trägt, abgewandten Fläche (9, 14) des Blocks angeordnet ist.

6. Tauscher nach einem der vorhergehenden Ansprüche, **dadurch gekennzeichnet, daß** jeder der beiden Blöcke (5, 6) auf einer Fläche (7, 11), die im wesentlichen senkrecht zur Fläche angeordnet ist, welche die inneren Elemente (15) zum Verbindung der Rohre (4) mit dem Block (5) trägt, Mittel (27) zum Befestigen an einem Strukturelement des Fahrzeugs hat.

7. Tauscher nach Anspruch 6, **dadurch gekennzeichnet, daß** die Befestigungsmittel Rastelemente (27) sind.
